(19) Europäisches Patentamt
European Patent Office
Office européen des brevets

(11) EP 3 557 679 A1

(12) EUROPEAN PATENT APPLICATION

(43) Date of publication:
23.10.2019 Bulletin 2019/43

(51) Int Cl.:
*H01M 10/0525* (2010.01) *H01M 10/0567* (2010.01)

(21) Application number: 19169746.5

(22) Date of filing: 17.04.2019

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 19.04.2018 KR 20180045645

(71) Applicant: **Samsung SDI Co., Ltd.**
**Gyeonggi-do 17084 (KR)**

(72) Inventors:
- **LEE, Harim**
  **17084 Yongin-si, Gyeonggi-do (KR)**
- **PARK, Hyejin**
  **17084 Yongin-si, Gyeonggi-do (KR)**
- **WOO, Myungheui**
  **17084 Yongin-si, Gyeonggi-do (KR)**
- **LIM, Jin-Hyeok**
  **17084 Yongin-si, Gyeonggi-do (KR)**
- **CHOI, Hyunbong**
  **17084 Yongin-si, Gyeonggi-do (KR)**

(74) Representative: **Gulde & Partner**
**Patent- und Rechtsanwaltskanzlei mbB**
**Wallstraße 58/59**
**10179 Berlin (DE)**

# (54) ELECTROLYTE FOR RECHARGEABLE LITHIUM BATTERY AND RECHARGEABLE LITHIUM BATTERY

(57) Disclosed is an electrolyte for a rechargeable lithium battery including a non-aqueous organic solvent, a lithium salt, and an additive, wherein the additive is a compound represented by Chemical Formula 1.

[Chemical Formula 1]

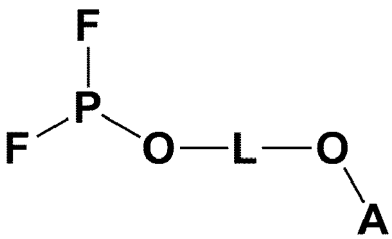

In Chemical Formula 1,
A is a substituted or unsubstituted C1 to C30 alkyl group, a substituted or unsubstituted C2 to C30 alkenyl group, a substituted or unsubstituted C2 to C30 alkynyl group, a substituted or unsubstituted C3 to C30 cycloalkyl group, a substituted or unsubstituted C3 to C30 cycloalkenyl group, a substituted or unsubstituted C3 to C30 cycloalkynyl group, or a substituted or unsubstituted C6 to C30 aryl group,
L is a substituted or unsubstituted C1 to C20 alkylene group, or $C_n(R^1)_{2n}$-O-$C_m(R^2)_{2m}$,
$R^1$ and $R^2$ are independently hydrogen, a substituted or unsubstituted C1 to C10 alkyl group, or a substituted or unsubstituted C3 to C10 cycloalkyl group, and
n and m are independently an integer ranging from 1 to 10.

FIG. 1

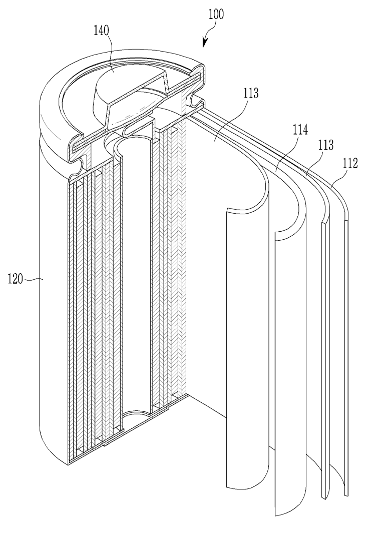


EP 3 557 679 A1

Printed by Jouve, 75001 PARIS (FR)

## Description

## BACKGROUND OF THE INVENTION

(a) Field of the Invention

An electrolyte for a rechargeable lithium battery and a rechargeable lithium battery including the same are disclosed.

(b) Description of the Related Art

A rechargeable lithium battery may be recharged and has three or more times as high energy density per unit weight as a conventional lead storage battery, nickel-cadmium battery, nickel hydrogen battery, nickel zinc battery and the like. It may be also charged at a high rate and thus, is commercially manufactured for a laptop, a cell phone, an electric tool, an electric bike, and the like, and researches on improvement of additional energy density have been actively made.

Such a rechargeable lithium battery is manufactured by injecting an electrolyte into a battery cell, which includes a positive electrode including a positive active material capable of intercalating/deintercalating lithium ions and a negative electrode including a negative active material capable of intercalating/deintercalating lithium ions.

Particularly, an electrolyte includes an organic solvent in which a lithium salt is dissolved and critically determines stability and performance of a rechargeable lithium battery.

$LiPF_6$ that is most commonly used as a lithium salt of an electrolyte, but has the problem of reacting with the electrolytic solvent causing depletion of the organic solvent generation of a large amount of gas. When $LiPF_6$ is decomposed, it generates LiF and $PF_5$, which leads to electrolyte depletion in the battery, resulting in degradation in high temperature performance and poor safety.

There are needs for an electrolyte which suppresses side reactions of such a lithium salt and improves the performance of the battery.

## SUMMARY OF THE INVENTION

An embodiment provides an electrolyte for a rechargeable lithium battery capable of ensuring high-temperature stability and thus improving battery performance.

Another embodiment provides a rechargeable lithium battery including the electrolyte for a rechargeable lithium battery.

An embodiment of the present disclosure provides an electrolyte for a rechargeable lithium battery including a non-aqueous organic solvent, a lithium salt, and an additive, wherein the additive includes a compound represented by Chemical Formula 1.

[Chemical Formula 1]

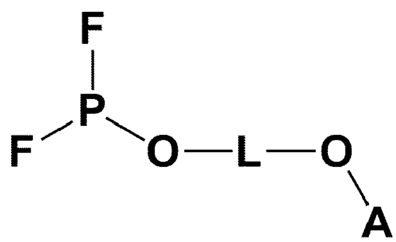

In Chemical Formula 1,

A is a substituted or unsubstituted C1 to C30 alkyl group, a substituted or unsubstituted C2 to C30 alkenyl group, a substituted or unsubstituted C2 to C30 alkynyl group, a substituted or unsubstituted C3 to C30 cycloalkyl group, a substituted or unsubstituted C3 to C30 cycloalkenyl group, a substituted or unsubstituted C3 to C30 cycloalkynyl group, or a substituted or unsubstituted C6 to C30 aryl group,

L is a substituted or unsubstituted C1 to C20 alkylene group, or $C_n(R^1)_{2n}$-O-$C_m(R^2)_{2m}$,

$R^1$ and $R^2$ are independently hydrogen, a substituted or unsubstituted C1 to C10 alkyl group, or a substituted or unsubstituted C3 to C10 cycloalkyl group, and

n and m are independently an integer ranging from 1 to 10.

L of Chemical Formula 1 may be a substituted or unsubstituted C2 to C20 alkylene group, or $C_n(R^1)_{2n}$-O-$C_m(R^2)_{2m}$,

$R^1$ and $R^2$ are independently hydrogen, a substituted or unsubstituted C1 to C10 alkyl group, or a substituted or unsubstituted C3 to C10 cycloalkyl group, and

n and m are independently an integer ranging from 2 to 10.

Chemical Formula 1 may be represented by Chemical Formula 1A.

[Chemical Formula 1A]

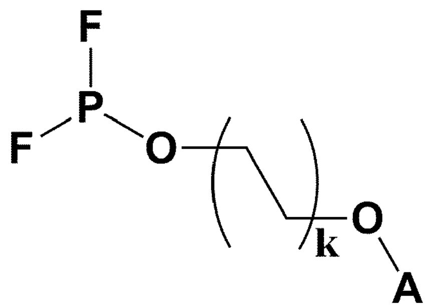

In Chemical Formula 1A,

A is a substituted or unsubstituted C1 to C30 alkyl group, and

k is an integer of 1 to 5.

The compound represented by Chemical Formula 1 may be included in an amount of 0.001 wt% to 5 wt% based on a total amount of the electrolyte for a rechargeable lithium battery. The additive may further include at least one additional additive selected from vinylethylene carbonate (VEC), fluoroethylene carbonate (FEC), propenesultone (PST), propanesultone (PS), lithium tetrafluoroborate ($LiBF_4$), lithium bis(oxalato)borate (LiBOB), and succinonitrile (SN).

The additional additive may be included in an amount of 0.1 wt% to less than 5 wt% based on a total amount of the electrolyte for a rechargeable lithium battery.

Another embodiment provides a rechargeable lithium battery including a positive electrode; a negative electrode; and the electrolyte.

The rechargeable lithium battery may realize improved high-temperature stability and cycle-life characteristics.

**BRIEF DESCRIPTION OF THE DRAWINGS**

FIG. 1 is a schematic view showing a rechargeable lithium battery according to an embodiment of the present disclosure.

FIG. 2 is a graph showing a cyclic voltammetry (CV) of an electrolyte according to Comparative Example 1.

FIG. 3 is a graph showing a cyclic voltammetry (CV) of an electrolyte according to Example 1.

FIG. 4 is a graph showing a cyclic voltammetry (CV) of the electrolytes according to Example 1 and Comparative Example 1.

FIG. 5 is a graph showing LSV evaluation results of Example 1 and Comparative Example 1.

FIG. 6 is a graph showing CID (Current Interrupt Device) operation starting points of rechargeable lithium battery cells according to Example 2 and Comparative Example 2.

## DETAILED DESCRIPTION OF THE EMBODIMENTS

Hereinafter, embodiments of the present disclosure are illustrated in detail. However, these embodiments are exemplary, the present disclosure is not limited thereto and the present disclosure is defined by the scope of claims.

As used herein, when a definition is not otherwise provided, 'substituted' refers to replacement of hydrogen of a compound by a substituent selected from a halogen atom (F, Br, Cl, or I), a hydroxy group, an alkoxy group, a nitro group, a cyano group, an amino group, an azido group, an amidino group, a hydrazino group, a hydrazono group, a carbonyl group, a carbamyl group, a thiol group, an ester group, a carboxyl acid group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C30 aryl group, a C7 to C30 arylalkyl group, a C1 to C4 alkoxy group, a C1 to C20 heteroalkyl group, a C3 to C20 heteroarylalkyl group, a C3 to C30 cycloalkyl group, a C3 to C15 cycloalkenyl group, a C6 to C15 cycloalkynyl group, and a C2 to C20 heterocycloalkyl group.

Hereinafter, an electrolyte for a rechargeable lithium battery according to an embodiment is described.

An electrolyte for a rechargeable lithium battery according to an embodiment includes a non-aqueous organic solvent, a lithium salt, and an additive, wherein the additive includes a compound represented by Chemical Formula 1.

[Chemical Formula 1]

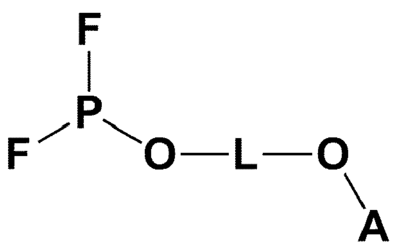

In Chemical Formula 1,

A is a substituted or unsubstituted C1 to C30 alkyl group, a substituted or unsubstituted C2 to C30 alkenyl group, a substituted or unsubstituted C2 to C30 alkynyl group, a substituted or unsubstituted C3 to C30 cycloalkyl group, a substituted or unsubstituted C3 to C30 cycloalkenyl group, a substituted or unsubstituted C3 to C30 cycloalkynyl group, or a substituted or unsubstituted C6 to C30 aryl group,

L is a substituted or unsubstituted C1 to C20 alkylene group, or $C_n(R^1)_{2n}$-O-$C_m(R^2)_{2m}$,

$R^1$ and $R^2$ are independently hydrogen, a substituted or unsubstituted C1 to C10 alkyl group, or a substituted or unsubstituted C3 to C10 cycloalkyl group, and

n and m are independently an integer ranging from 1 to 10.

Generally, when an electrolyte is exposed to a high temperature, $LiPF_6$ that is a kind of lithium salt, is decomposed into LiF and $PF_5$ in the electrolyte which may include a small amount of water. These compounds may react with the organic solvent and thereby partly consume the same. Furthermore, the surface of the electrodes may be damaged by the process. Therefore, high-temperature stability and cycle-life characteristics of a lithium battery may be deteriorated.

When the additive including the compound represented by Formula 1 is added to the electrolyte, a robust SEI (solid electrolyte interface) film having an excellent ion conductivity is formed on the surface of a negative electrode, and thereby it may suppress the decomposition of the surface of the negative electrode during a high-temperature cycle operation and may prevent an oxidation reaction of the electrolyte.

Specifically, the compound represented by Chemical Formula 1 may be coordinated with a pyrolyzed product of a lithium salt such as $LiPF_6$ or anions dissociated from the lithium salt and thus form a complex, and the complex formation may stabilize the pyrolyzed product of the lithium salt such as $LiPF_6$ or the anions dissociated from the lithium salt. Therefore, it may suppress an undesired side reaction of the anions with the electrolyte and prevent gas generation

inside a rechargeable lithium battery and thus greatly reduce a defect rate as well as improve cycle-life characteristics of the rechargeable lithium battery.

In addition, since the side reaction with the electrolyte is suppressed, a SEI film having a low resistance may be formed, and accordingly, battery internal resistance may be reduced.

In addition, the compound represented by Chemical Formula 1 may participate in an electrochemical reaction with the components of the SEI film to make the film more robust, and may also improve stability of other components included in the electrolyte due to an oxidative decomposition.

On the other hand, the compound represented by Chemical Formula 1 may be decomposed into a difluorophosphite group ($-OPF_2$) and an oxide fragment.

The difluorophosphite group ($-OPF_2$) and the oxide fragment have excellent electrical and chemical reactivity and thus may form a donor-acceptor bond with a transition metal oxide exposed to the surface of a positive active material and accordingly, form a protective layer in a form of a complex and suppress elution of metal ions.

In addition, the difluorophosphite group ($-OPF_2$) adhered to the transition metal oxide during the initial charge of a rechargeable lithium battery may be oxidized into a plurality of fluorophosphate and resultantly, form a non-active layer having more stability about a positive electrode and excellent ion conductivity. Accordingly, oxidization of other components of the electrolyte may be prevented, and resultantly, cycle-life performance of the rechargeable lithium battery may be improved, and simultaneously, swelling of the rechargeable lithium battery may be prevented.

Particularly, the difluorophosphite group substituted with a fluoro group maintains an appropriate reactivity and thus prevents decomposition of water or the electrolyte by a side reaction and also generation of an undesired byproduct and accordingly, may work as an appropriate additive in the electrolyte.

According to one embodiment, L of Chemical Formula 1 is a substituted or unsubstituted C2 to C20 alkylene group or $C_n(R^1)_{2n}$-O-$C_m(R^2)_{2m}$,

$R^1$ and $R^2$ are independently hydrogen, a substituted or unsubstituted C1 to C10 alkyl group, or a substituted or unsubstituted C3 to C10 cycloalkyl group, and

n and m are independently an integer of 2 to 10, preferably n and m are independently an integer of 2 to 5, more preferred n and m are the same, most preferred n and m are 2.

When n is 2 or more, $R^1$ may be respectively the same or different one another.

In addition, when m is 2 or more, $R^2$ may be respectively the same or different one another. Preferably, $R^1$ and $R^2$ are hydrogen.

L of Chemical Formula 1 may be a substituted or unsubstituted C2 to C20 alkylene group. Preferably, L is a substituted or unsubstituted C2 to C10 alkylene group, more preferably L is a substituted or unsubstituted C2 to C5 alkylene group. In particular, L may represent one of a methylene group (C1), an ethylene group (C2), and a propylene group (C3).

For example, the compound represented by Chemical Formula 1 may have a structure of including an ethylene group or a diethylene ether group (i.e. when n and m are 2 and $R^1$ and $R^2$ are hydrogen) as a minimum unit in L. The compound represented by Chemical Formula 1 may generally be decomposed by reduction in the electrolyte to form an SEI film and to stabilize an electrode interface, and resultantly, may further improve an effect of suppressing an additional decomposition reaction of the electrolyte.

For example, Chemical Formula 1 may be represented by Chemical Formula 1A.

[Chemical Formula 1A]

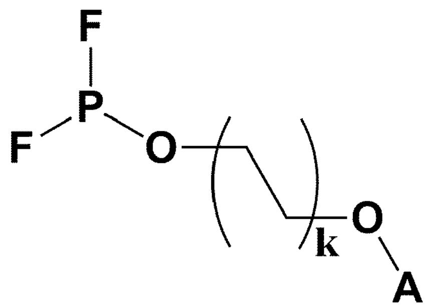

In Chemical Formula 1A,

A is a substituted or unsubstituted C1 to C30 alkyl group, and

k is an integer of 1 to 5, more preferably k is an integer of 1 to 3, most preferred k is 1.

A in Formula 1 or Formula 1A may be a C1-C30 alkyl group, which refers to a linear or branched aliphatic monovalent hydrocarbon group having 1 to 30 carbon atoms. Preferably, A represents a C1-C10 alkyl group, more preferred a C1-C5 alkyl group and most preferred one of a methyl group (C1), an ethyl group (C2), and a propyl group (C3).

Chemical Formula 1A may be for example a compound represented by Chemical Formula 1A-1.

[Compound 1A-1]

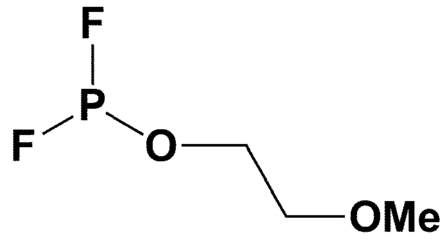

The compound represented by Chemical Formula 1 may be included in an of 0.001 wt% to 5 wt%, specifically 0.01 wt% to 5 wt%, more specifically 0.1 wt% to 5 wt%, for example 0.5 wt% to 3 wt% based on a total amount of the electrolyte for a rechargeable lithium battery.

When the amount of the compound represented by Chemical Formula 1 is in the above ranges, a resistance increase at a high temperature may be prevented, and a rechargeable lithium battery having improved cycle-life characteristics may be realized.

In other words, when the compound represented by Chemical Formula 1 is included in an amount of less than 0.001 wt%, storage characteristics at a high temperature and a swelling improvement effect may be deteriorated, but when the compound represented by Chemical Formula 1 is included in an amount of greater than 5 wt%, a cycle-life may be deteriorated due to an interface resistance increase.

The additive according to an embodiment may further include an additional additive.

The additional additive may be for example at least one selected from vinylethylene carbonate (VEC), fluoroethylene carbonate (FEC), propenesultone (PST), propanesultone (PS), lithiumtetrafluoroborate ($LiBF_4$), lithium bis(oxalato)borate (LiBOB), and succinonitrile (SN).

The additional additive may be included in an amount of 0.1 wt% to 5 wt% and specifically, in an amount of 0.5 wt% to 3 wt% based on a total amount of the electrolyte for a rechargeable lithium battery.

When the additional additive is included within the range, battery resistance may be effectively suppressed, and a rechargeable lithium battery having much excellent cycle-life characteristics may be realized.

The non-aqueous organic solvent serves as a medium for transmitting ions taking part in the electrochemical reaction of a battery.

The non-aqueous organic solvent may be a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and butylene carbonate (BC). The ester-based solvent may include methyl acetate, ethyl acetate, n-propyl acetate, dimethylacetate, methylpropionate, ethylpropionate, propylpropionate, decanolide, mevalonolactone, and caprolactone. The ether-based solvent may include dibutyl ether, tetraglyme, diglyme, dimethoxyethane, 2-methyltetrahydrofuran, and tetrahydrofuran. In addition, the ketone-based solvent may include cyclohexanone. The alcohol-based solvent may include ethanol, and isopropyl alcohol and the aprotic solvent may include nitriles such as R-CN (wherein R is a hydrocarbon group having a C2 to C20 linear, branched, or cyclic structure and may include a double bond, an aromatic ring, or an ether bond), dioxolanes such as 1,3-dioxolane, and sulfolanes.

The non-aqueous organic solvent may be used alone or in a mixture. When the organic solvent is used in a mixture, the mixture ratio may be controlled in accordance with a desirable battery performance.

The carbonate-based solvent is prepared by mixing a cyclic carbonate and a linear carbonate. When the cyclic carbonate and linear carbonate are mixed together in a volume ratio of about 1:1 to about 1:9, an electrolyte performance may be improved.

The non-aqueous organic solvent may further include an aromatic hydrocarbon-based organic solvent in addition to the carbonate based solvent. Herein, the carbonate-based solvent and the aromatic hydrocarbon-based organic solvent may be mixed in a volume ratio of about 1:1 to about 30:1.

The aromatic hydrocarbon-based organic solvent may be an aromatic hydrocarbon-based compound of Chemical Formula 2.

[Chemical Formula 2]

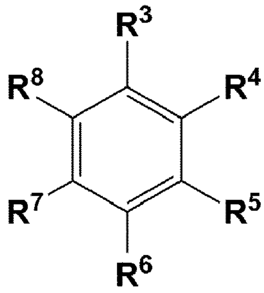

In Chemical Formula 2, $R^3$ to $R^8$ are the same or different and are selected from hydrogen, a halogen, a C1 to C10 alkyl group, and a haloalkyl group.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate or an ethylene carbonate-based compound represented by Chemical Formula 3 in order to improve cycle-life of a battery.

[Chemical Formula 3]

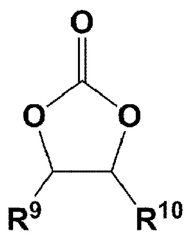

In Chemical Formula 3, $R^9$ and $R^{10}$ are the same or different and selected from hydrogen, a halogen, a cyano group (CN), a nitro group ($NO_2$), and a fluorinated C1 to C5 alkyl group, provided that at least one of $R^9$ and $R^{10}$ is a halogen, a cyano group (CN), a nitro group ($NO_2$), and a fluorinated C1 to C5 alkyl group and $R^9$ and $R^{10}$ are not simultaneously hydrogen.

Examples of the ethylene carbonate-based compound are difluoroethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be used within an appropriate range.

The lithium salt dissolved in the non-organic solvent supplies lithium ions in a battery, enables a basic operation of a rechargeable lithium battery, and improves transportation of the lithium ions between positive and negative electrodes. Examples of the lithium salt include at least one supporting salt selected from $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $LiC_4F_9SO_3$, $LiClO_4$, $LiAlO_2$, $LiAlCl_4$, $LiN(C_xF_{2x+1}SO_2)(C_yF_{2y+1}SO_2)$ (wherein x and y are natural numbers, for example, an integer ranging from 1 to 20), LiCl, LiI and $LiB(C_2O_4)_2$ (lithium bis(oxalato) borate; LiBOB). preferably, the lithium salt is $LiPF_6$. The lithium salt may be used in a concentration ranging from 0.1 M to 2.0 M. When the lithium salt is included at the above concentration range, an electrolyte may have excellent performance and lithium ion mobility due to optimal electrolyte conductivity and viscosity.

Another embodiment provides a rechargeable lithium battery including a positive electrode; a negative electrode; and the electrolyte.

The positive electrode includes a current collector and a positive active material layer disposed on the current

collector and including a positive active material.

The positive active material may include lithiated intercalation compounds that reversibly intercalate and deintercalate lithium ions.

Specifically, at least one composite oxide of lithium and a metal of cobalt, manganese, nickel, or a combination thereof may be used.

Examples of the positive active material may be a compound represented by one of following chemical formulae. $Li_aA_{1-b}X_bD_2$ ($0.90 \le a \le 1.8$, $0 \le b \le 0.5$); $Li_aA_{1-b}X_bO_{2-c}D_c$ ($0.90 \le a \le 1.8$, $0 \le b \le 0.5$, $0 \le c \le 0.05$); $Li_aE_{1-b}X_bO_{2-c}D_c$ ($0.90 \le a \le 1.8$, $0 \le b \le 0.5$, $0 \le c \le 0.05$); $Li_aE_{2-b}X_bO_{4-c}D_c$ ($0.90 \le a \le 1.8$, $0 \le b \le 0.5$, $0 \le c \le 0.05$); $Li_aNi_{1-b-c}Co_bX_cD_\alpha$ ($0.90 \le a \le 1.8$, $0 \le b \le 0.5$, $0 \le c \le 0.5$, $0 < \alpha \le 2$); $Li_aNi_{1-b-c}CO_bX_cO_{2-\alpha}T_\alpha$ ($0.90 \le a \le 1.8$, $0 \le b \le 0.5$, $0 \le c \le 0.05$, $0 < \alpha < 2$); $Li_aNi_{1-b-c}Co_bX_cO_{2-\alpha}T_2$ ($0.90 \le a \le 1.8$, $0 \le b \le 0.5$, $0 \le c \le 0.05$, $0 < \alpha < 2$); $Li_aNi_{1-b-c}Mn_bX_cD_\alpha$ ($0.90 \le a \le 1.8$, $0 \le b \le 0.5$, $0 \le c \le 0.05$, $0 < \alpha \le 2$); $Li_aNi_{1-b-c}Mn_bX_cO_{2-\alpha}T_\alpha$ ($0.90 \le a \le 1.8$, $0 \le b \le 0.5$, $0 \le c \le 0.05$, $0 < \alpha < 2$); $Li_aNi_{1-b-c}Mn_bX_cO_{2-\alpha}T_2$ ($0.90 \le a \le 1.8$, $0 \le b \le 0.5$, $0 \le c \le 0.05$, $0 < \alpha < 2$); $Li_aNi_bE_cG_dO_2$ ($0.90 \le a \le 1.8$, $0 \le b \le 0.9$, $0 \le c \le 0.5$, $0.001 \le d \le 0.1$); $Li_aNi_bCo_cMn_dG_eO_2$ ($0.90 \le a \le 1.8$, $0 \le b \le 0.9$, $0 \le c \le 0.5$, $0 \le d \le 0.5$, $0.001 \le e \le 0.1$); $Li_aNiG_bO_2$ ($0.90 \le a \le 1.8$, $0.001 \le b \le 0.1$); $Li_aCoG_bO_2$ ($0.90 \le a \le 1.8$, $0.001 \le b \le 0.1$); $Li_aMn_{1-4}G_bO_2$ ($0.90 \le a \le 1.8$, $0.001 \le b \le 0.1$); $Li_aMn_2G_bO_4$ ($0.90 \le a \le 1.8$, $0.001 \le b \le 0.1$); $Li_aMn_{1-g}G_gPO_4$ ($0.90 \le a \le 1.8$, $0 \le g \le 0.5$); $QO_2$; QS2; LiQS2; $V_2O_5$; $LiV_2O_5$; $LiZO_2$; $LiNiVO_4$; $Li_{(3-f)}J_2(PO_4)_3$ ($0 \le f \le 2$); $Li_{(3-f)}Fe_2(PO_4)_3$ ($0 \le f \le 2$); $Li_aF_ePO_4$ ($0.90 \le a \le 1.8$)

In chemical formulae, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound. For example, the method may include any coating method (e.g., spray coating, dipping, etc.), but is not illustrated in more detail since it is well-known to those skilled in the related field.

Specific examples of the positive active material according to an embodiment may be lithium cobalt oxide.

The positive active material may be included in an amount of about 90 wt% to about 98 wt% based on a total weight of the positive active material layer.

In an embodiment of the present disclosure, the positive active material layer may include a binder and a conductive material. Herein, the binder and the conductive material may be included in an amount of about 1 wt% to about 5 wt%, respectively based on a total amount of the positive active material layer.

The binder improves binding properties of positive active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The conductive material is included to provide electrode conductivity. Any electrically conductive material may be used as a conductive material unless it causes a chemical change. Examples of the conductive material may include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may use Al, but is not limited thereto.

The negative electrode includes a current collector and a negative active material layer formed on the current collector and including a negative active material.

The negative active material may include a material that reversibly intercalates/deintercalates lithium ions, a lithium metal, a lithium metal alloy, a material being capable of doping/dedoping lithium, or transition metal oxide.

The material that reversibly intercalates/deintercalates lithium ions may include a carbon material. The carbon material may be any generally-used carbon-based negative active material in a rechargeable lithium ion battery. Examples thereof may be crystalline carbon, amorphous carbon, or a mixture thereof. The crystalline carbon may be non-shaped, or sheet, flake, spherical, or fiber shaped natural graphite or artificial graphite. The amorphous carbon may be a soft carbon, a hard carbon, a mesophase pitch carbonization product, fired coke, and the like.

The lithium metal alloy includes an alloy of lithium and a metal selected from Na, K, Rb, Cs, Fr, Be, Mg, Ca,

Sr, Si, Sb, Pb, In, Zn, Ba, Ra, Ge, Al, and Sn.

The material being capable of doping/dedoping lithium may be Si, Si-C composite, $SiO_x$ ($0 < x < 2$), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, and not Si), Sn, $SnO_2$, a Sn-R alloy (wherein R is an element selected from an alkali metal, an alkaline-earth metal, a Group 13 element, a Group 14 element, a Group 15 element, a Group 16 element, a transition metal, a rare earth element, and a combination thereof, and not Sn), and the like. At least one of these materials may be mixed with $SiO_2$. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The transition metal oxide may be vanadium oxide, lithium vanadium oxide, or lithium titanium oxide.

In the negative active material layer, the negative active material may be included in an amount of about 95 wt% to about 99 wt% based on a total weight of the negative active material layer.

In an embodiment of the present disclosure, the negative active material layer includes a binder, and optionally a conductive material. In the negative active material layer, a content of the binder may be about 1 wt% to about 5 wt% based on a total weight of the negative active material layer. When the negative active material layer includes a conductive material, the negative active material layer includes about 90 wt% to about 98 wt% of the negative active material, about 1 wt% to about 5 wt% of the binder, and about 1 wt% to about 5 wt% of the conductive material.

The binder improves binding properties of negative active material particles with one another and with a current collector. The binder includes a non-water-soluble binder, a water-soluble binder, or a combination thereof.

The non-water-soluble binder may be selected from polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, polyethylene, polypropylene, ethylenepropylenecopolymer, polyethyleneoxide, polyvinylpyrrolidone, polyepichlorohydrine, polyphosphazene, polyacrylonitrile, polystyrene, an ethylenepropylenediene copolymer, polyvinylpyridine, chlorosulfonated polyethylene, latex, a polyester resin, an acrylic resin, a phenolic resin, an epoxy resin, polyvinyl alcohol, and a combination thereof.

When the water-soluble binder is used as a negative electrode binder, a cellulose-based compound may be further used to provide viscosity. The cellulose-based compound includes one or more of carboxymethyl cellulose, hydroxypropylmethyl cellulose, methyl cellulose, or alkali metal salts thereof. The alkali metals may be Na, K, or Li. Such a thickener may be included in an amount of about 0.1 to about 3 parts by weight based on 100 parts by weight of the negative active material.

The conductive material is included to provide electrode conductivity. Any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof.

The rechargeable lithium battery may further include a separator between the negative electrode and the positive electrode, depending on a type of the rechargeable lithium battery. Examples of a suitable separator material include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

FIG. 1 is a schematic view of a rechargeable lithium battery according to an embodiment of the present disclosure. A rechargeable lithium battery according to an embodiment is for example a cylindrical battery. However, the present disclosure is not limited thereto, and may be applied to various types of batteries such as a prismatic type, a pouch type, and the like.

Referring to FIG. 1, a rechargeable lithium battery 100 according to an embodiment includes a battery cell including a negative electrode 112, a positive electrode 114 facing the negative electrode 112, a separator 113 interposed between the negative electrode 112 and the positive electrode 114, and an electrolyte (not shown) for a rechargeable lithium battery impregnating the negative electrode 112, the positive electrode 114, and the separator 113, a battery case 120 housing the battery cell, and a sealing member 140 sealing the battery case 120.

Hereinafter, examples of the present disclosure and comparative examples are described.

Manufacture of Rechargeable Lithium Battery Cell

Example 1

Positive active material slurry was prepared by using $LiCoO_2$ as a positive active material, polyvinylidene fluoride as a binder, and ketjen black as a conductive material in a weight ratio of 97.3:1.4:1.3 and dispersing the mixture in N-methyl pyrrolidone.

The positive active material slurry was coated on a 15μm-thick Al foil, dried at 100°C, and pressed to manufacture a positive electrode.

On the other hand, negative active material slurry was prepared by mixing graphite as a negative active material, polyvinylidene fluoride as a binder, and ketjen black as a conductive material in a weight ratio of 98:1:1 and then, dispersing the mixture in N-methyl pyrrolidone.

The negative active material slurry was coated on a 10μm-thick Cu foil, dried at 100°C, and pressed to manufacture a negative electrode.

The positive and negative electrodes, a 25μm-thick polyethylene separator, and an electrolyte were used to manufacture a rechargeable lithium battery cell.

The electrolyte has a following composition.

(Electrolyte Composition)

Salt: 1.5 M $LiPF_6$
Solvent: ethylene carbonate:ethylmethyl carbonate:dimethyl carbonate (EC:EMC:DMC = volume ratio of 2:1:7)
Additive: 1 wt% of the compound represented by Chemical Formula 1A-1

[Chemical Formula 1A-1]

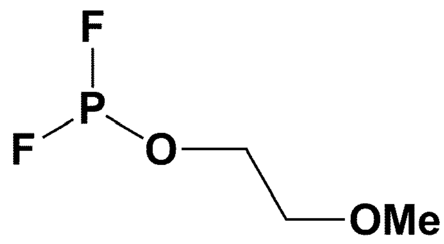

(Herein, in the electrolyte composition, "wt%" is based on a total amount of an electrolyte (a lithium salt + a non-aqueous organic solvent + an additive))

Example 2

A rechargeable lithium battery cell was manufactured according to the same method as Example 1 except that the electrolyte composition was changed as follows.

(Electrolyte Composition)

Salt: 1.5 M $LiPF_6$
Solvent: ethylene carbonate:ethylmethyl carbonate:dimethyl carbonate: fluoroethylene carbonate (EC:EMC:DMC:FEC= volume ratio of 15:10:59:16)
Additive: 1 wt% of the compound represented by Chemical Formula 1A-1, 0.2 wt% of lithium tetrafluoroborate ($LiBF_4$), 1 wt% of lithium bis(oxalato)borate (LiBOB), and 1 wt% of SN

Example 3

A rechargeable lithium battery cell was manufactured according to the same method as Example 2 except that the amount of the compound represented by Chemical Formula 1A-1 was changed into 0.5 wt%.

Example 4

A rechargeable lithium battery cell was manufactured according to the same method as Example 2 except that the amount of the compound represented by Chemical Formula 1A-1 was changed into 3 wt%.

Comparative Example 1

A rechargeable lithium battery cell was manufactured according to the same method as Example 1 except that the compound represented by Chemical Formula 1A-1 was not used as the additive.

Comparative Example 2

A rechargeable lithium battery cell was manufactured according to the same method as Example 2 except that the compound represented by Chemical Formula 1A-1 was not used as the additive.

Battery Characteristics Evaluation

Evaluation 1: CV Characteristics Evaluation

Electrochemical stability of the rechargeable lithium battery cells according to Example 1 and Comparative Example 1 was evaluated by measuring cyclic voltammetry (CV), and the results are shown in FIGS. 2 to 4.

A cyclic voltammetry (CV) was measured by using a triple electrode electrochemical cell using graphite as a working electrode and Li metals as a reference electrode and a counter electrode. Herein, scan was 3 cycles performed from 3 V to 0 V and from 0 V to 3 V at a rate of 0.1 mV/sec.

FIG. 2 is a graph showing a cyclic voltammetry (CV) of the electrolyte according to Comparative Example 1.

FIG. 3 is a graph showing a cyclic voltammetry (CV) of the electrolyte according to Example 1.

FIG. 4 is a graph showing a cyclic voltammetry (CV) comparison of the electrolytes according to Example 1 and Comparative Example 1 at the initial cycle.

As shown in FIG. 2, the three-electrode cell of Comparative Example 1 showed a cycle-life deterioration phenomenon, as discharge capacity thereof continuously decreased depending on a cycle, and also, an output resistance increase tendency, as a peak area reacting for the same time became smaller compared to the peaks in the CV of Example 1.

On the contrary, the three-electrode cell of Example 1 exhibited a sharp CV cycle compared with that of Comparative Example 1 as shown in FIG. 3. The reason is that the three-electrode cell of Example 1 received less resistance than that of Comparative Example 1.

In addition, discharge capacity of the three-electrode cell depending on a cycle was maintained. Accordingly, the three-electrode cell according to Example 1 indirectly showed improvement of output and cycle-life characteristics compared with the three-electrode cell not including a compound represented by Chemical Formula 1 as an additive according to Comparative Example 1.

Referring to FIG. 4, a three-electrode cell including the electrolyte according to Example 1 showed a reduction peak at about 0.8 V in a cyclic voltammetry (CV) curve, but a three-electrode cell including the electrolyte according to Comparative Example 1 showed no reduction peak in a cyclic voltammetry (CV) curve. Referring to these results, in the rechargeable lithium battery cell including the electrolyte according to Example 1, an initial SEI film may be expected to be formed. Accordingly, the rechargeable lithium battery cell according to Example 1 may be expected to have excellent battery performance compared with the rechargeable lithium battery cell having no initial SEI film according to Comparative Example 1.

Evaluation 2: Linear Sweep Voltammetry (LSV) Evaluation of Battery Cells

Oxidative electrode decomposition of the electrolytes according to Example 1 and Comparative Example 1 was evaluated by using a linear sweep voltammetry (LSV) method at 25 °C, and the results are shown in FIG. 5.

A three-electrode electrochemical cell using a Cu electrode as a working electrode) and Li metal as a reference electrode and a counter electrode was used. Herein, scan was performed at a rate of 1 mV/sec in a range of 2.5 V to 7.0 V.

FIG. 5 shows LSV evaluation results of Example 1 and Comparative Example 1.

Referring to FIG. 5, the electrolyte of Example 1 including the compound represented by Chemical Formula a as an additive maintained a low oxidation current in a considerably wide voltage section compared with that of Comparative Example 1. Resultantly, the electrolyte of Example 1 was effectively suppressed from an oxidation reaction with a positive electrode in the considerably wide voltage section and thus may be expected to have an excellent metal elution suppression effect at the positive electrode.

Evaluation 3: Evaluation of Battery Storage Characteristics at High Temperature

Storage characteristics of the rechargeable lithium battery cells of Example 2 and Comparative Example 2 at a high temperature were evaluated by measuring their CID open time, and the results are shown in Table 1 and FIG. 6.
The CID (Current Interrupt Device) open time were measured by twice performing a formation charge/discharge at 0.2 C/0.5 C and then, once an charge/discharge experiment at a standard charge/discharge current density of 0.5 C/0.2 C, a charge cut-off voltage of 4.2 V (Li/graphite), and a discharge cut-off voltage of 3.0 V (Li/graphite) and then, placing the cells in a 90°C chamber for 60 hours.
FIG. 6 is a graph showing the CID (Current Interrupt Device) operation starting points of the rechargeable lithium battery cells according to Example 2 and Comparative Example 2.

[Table 1]

| | CID OPEN TIME (hr) (@ 90°C) |
|---|---|
| Comparative Example 2 | 3.1 |
| Example 2 | 7.8 |

Referring to Table 1 and FIG. 6, the cell of Comparative Example 2 not including the compound represented by Chemical Formula a as an additive showed a sharp voltage drop before 5 hours, when stored at a high temperature of 90°C, but the cell of Example 2 including the compound represented by Chemical Formula a as an additive delayed decomposition of the electrolyte and decreased a resistance increase and thus showed an OCV drop delay effect. In other words, a rechargeable lithium battery cell according to the present disclosure shows an excellent effect of suppressing gas generation, when stored at a high temperature.

Evaluation 4: DC-Internal Resistance (DC-IR)

The rechargeable lithium battery cells according to Examples 2 to 4 and Comparative Example 2 were set to have residual capacity (a state of charge) of 100 % and then, discharged at 1 C for 10 seconds, at 2 C for 10 seconds, at 3 C for 10 seconds, at 5 C for 10 seconds, and then, their cut-off voltages were extrapolated to calculate a slope and thus obtain DC-internal resistance (DC-IR).
After measuring the DC-internal resistance, the rechargeable lithium battery cells according to Examples 2 to 4 and Comparative Example 2 were placed at 60°C for 10 days, and then, their DC-internal resistances were measured again in the same method as aforementioned.
The DC-internal resistances of the cells were respectively twice measured, and their resistance increase rates after the storage for 10 days are shown in Table 2.

Resistance increase rate = (DC-internal resistance after 10 days - Initial DC-internal resistance)/(Initial DC-internal resistance) * 100

[Table 2]

| | Cell Nos. | DC-IR (mOhm) | | Δ DC-IR (%) |
|---|---|---|---|---|
| | | 0D | 10D | 0-10D |
| Comparative Example 2 | 1 | 19.65 | 25.43 | 29.39 |
| Comparative Example 2 | 2 | 19.72 | 25.56 | 29.63 |
| Example 2 | 3 | 19.67 | 24.11 | 22.57 |
| Example 2 | 4 | 19.57 | 24.60 | 25.67 |
| Example 3 | 5 | 20.04 | 24.69 | 23.19 |
| Example 3 | 6 | 20.20 | 24.97 | 23.66 |

(continued)

| | Cell Nos. | DC-IR (mOhm) | | Δ DC-IR (%) |
|---|---|---|---|---|
| | | 0D | 10D | 0-10D |
| Example 4 | 7 | 20.10 | 23.44 | 16.65 |
| Example 4 | 8 | 19.91 | 23.52 | 18.11 |

Referring to Table 2, Examples 2 to 4 showed small DC-internal resistance after being placed at 60°C for 10 days unlike Comparative Example 2. Accordingly, when the compound represented by Chemical Formula a was used as an additive, antioxidation at a high temperature and antiresistance of the battery cells in a charge state were improved.

<Description of Symbols>

100: rechargeable lithium battery
112: negative electrode
113: separator
114: positive electrode
120: battery case
140: sealing member

## Claims

1. An electrolyte for a rechargeable lithium battery (100), comprising a non-aqueous organic solvent, a lithium salt, and an additive,
wherein the additive comprises a compound represented by Chemical Formula 1:

[Chemical Formula 1]

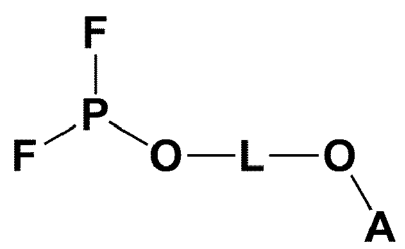

wherein, in Chemical Formula 1,

A is a substituted or unsubstituted C1 to C30 alkyl group, a substituted or unsubstituted C2 to C30 alkenyl group, a substituted or unsubstituted C2 to C30 alkynyl group, a substituted or unsubstituted C3 to C30 cycloalkyl group, a substituted or unsubstituted C3 to C30 cycloalkenyl group, a substituted or unsubstituted C3 to C30 cycloalkynyl group, or a substituted or unsubstituted C6 to C30 aryl group,
L is a substituted or unsubstituted C1 to C20 alkylene group, or $C_n(R^1)_{2n}$-O-$C_m(R^2)_{2m}$,
$R^1$ and $R^2$ are independently hydrogen, a substituted or unsubstituted C1 to C10 alkyl group, or a substituted or unsubstituted C3 to C10 cycloalkyl group, and
n and m are independently an integer ranging from 1 to 10.

2. The electrolyte for a rechargeable lithium battery of claim 1, wherein L of Chemical Formula 1 is a substituted or unsubstituted C2 to C20 alkylene group, or $C_n(R^1)_{2n}$-O-$C_m(R^2)_{2m}$,
$R^1$ and $R^2$ are independently hydrogen, a substituted or unsubstituted C1 to C10 alkyl group, or a substituted or unsubstituted C3 to C10 cycloalkyl group, and

the n and m are independently an integer of 2 to 10.

3. The electrolyte for a rechargeable lithium battery of claim 1, wherein Chemical Formula 1 is represented by Chemical Formula 1A:

[Chemical Formula 1A]

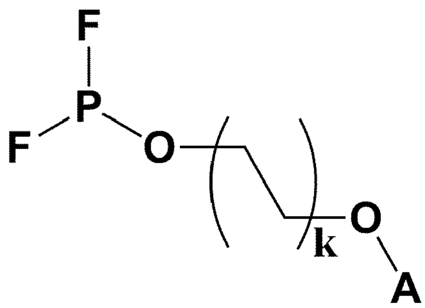

wherein, in Chemical Formula 1A,

A is a substituted or unsubstituted C1 to C30 alkyl group, and
k is an integer of 1 to 5.

4. The electrolyte for a rechargeable lithium battery of claim 1, wherein the compound represented by Chemical Formula 1 is included in an amount of 0.001 wt% to 5 wt% based on a total amount of the electrolyte for a rechargeable lithium battery.

5. The electrolyte for a rechargeable lithium battery of claim 1, wherein the additive further comprises at least one additional additive of vinylethylene carbonate (VEC), fluoroethylene carbonate (FEC), propenesultone (PST), propanesultone (PS), lithiumtetrafluoroborate ($LiBF_4$), lithium bis(oxalato)borate (LiBOB), and succinonitrile (SN).

6. The electrolyte for a rechargeable lithium battery of claim 5, wherein the additional additive is included in an amount of 0.1 wt% to less than 5 wt% based on a total amount of the electrolyte for a rechargeable lithium battery.

7. The electrolyte for a rechargeable lithium battery of any one of the preceding claims, wherein the lithium salt is $LiPF_6$.

8. The electrolyte for a rechargeable lithium battery of any one of the preceding claims, wherein the additive is a compound represented by Chemical Formula 1A-1:

[Chemical Formula 1A-1]

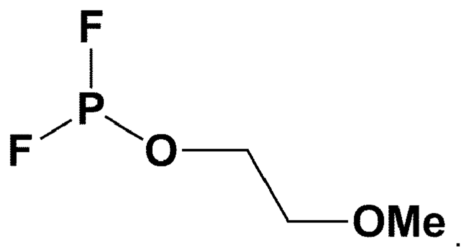

9. A rechargeable lithium battery (100), comprising
a positive electrode (114);
a negative electrode (112); and
an electrolyte of any one of the preceding claims.

FIG. 1

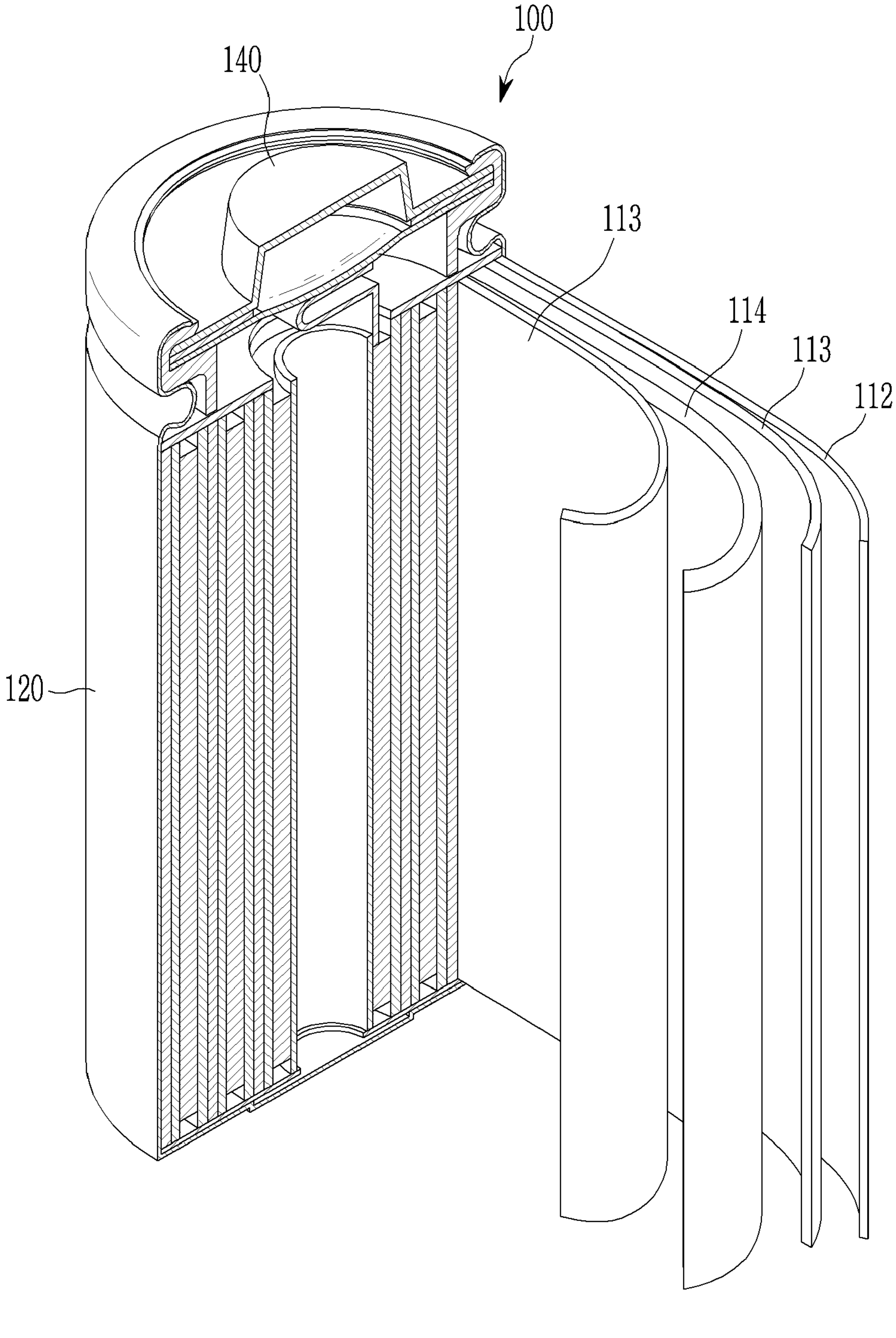

FIG. 2

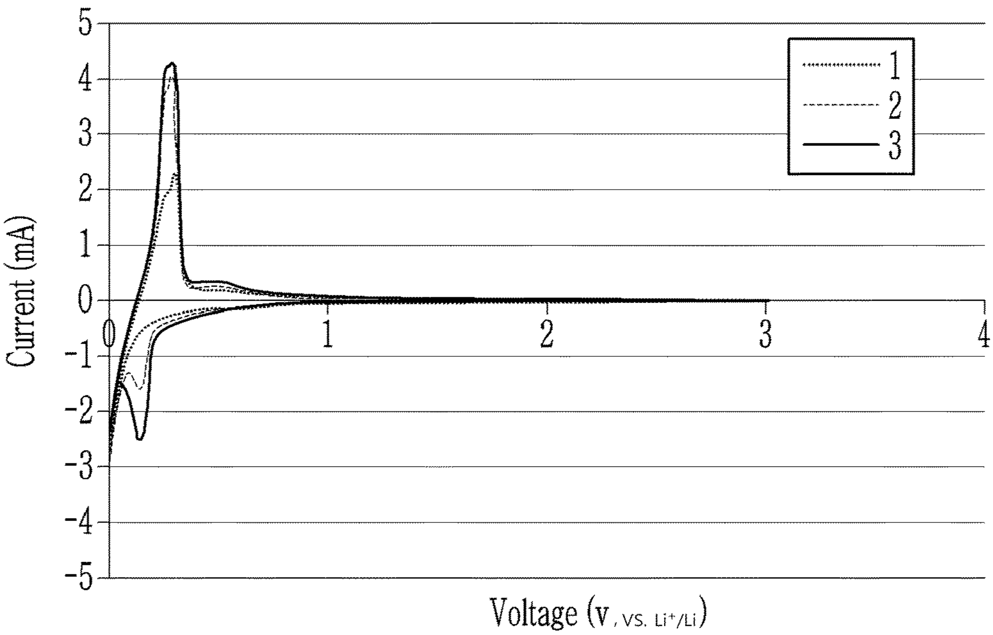

FIG. 3

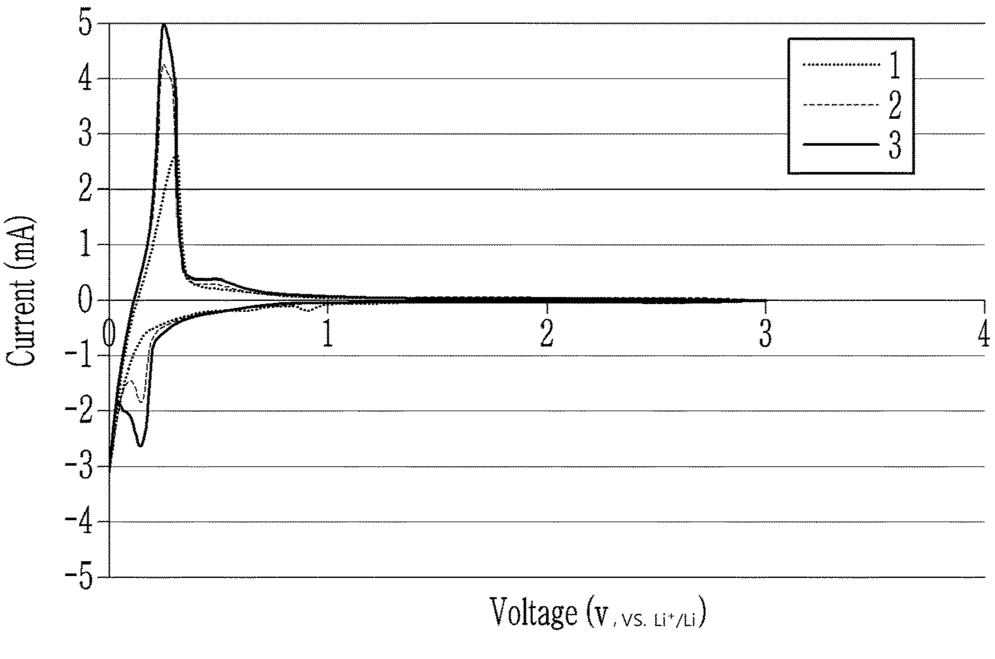

FIG. 4

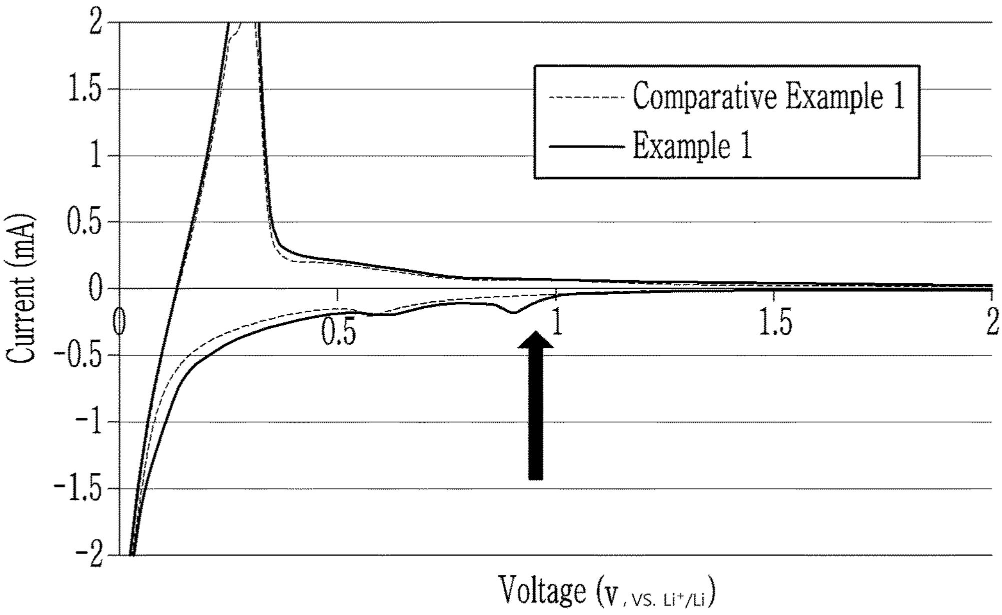
2
1.5
1
0.5
0
-0.5
-1
-1.5
-2
Current (mA)
0
0.5
1
1.5
2
Comparative Example 1
Example 1
Voltage (v, vs. Li+/Li)

FIG. 5

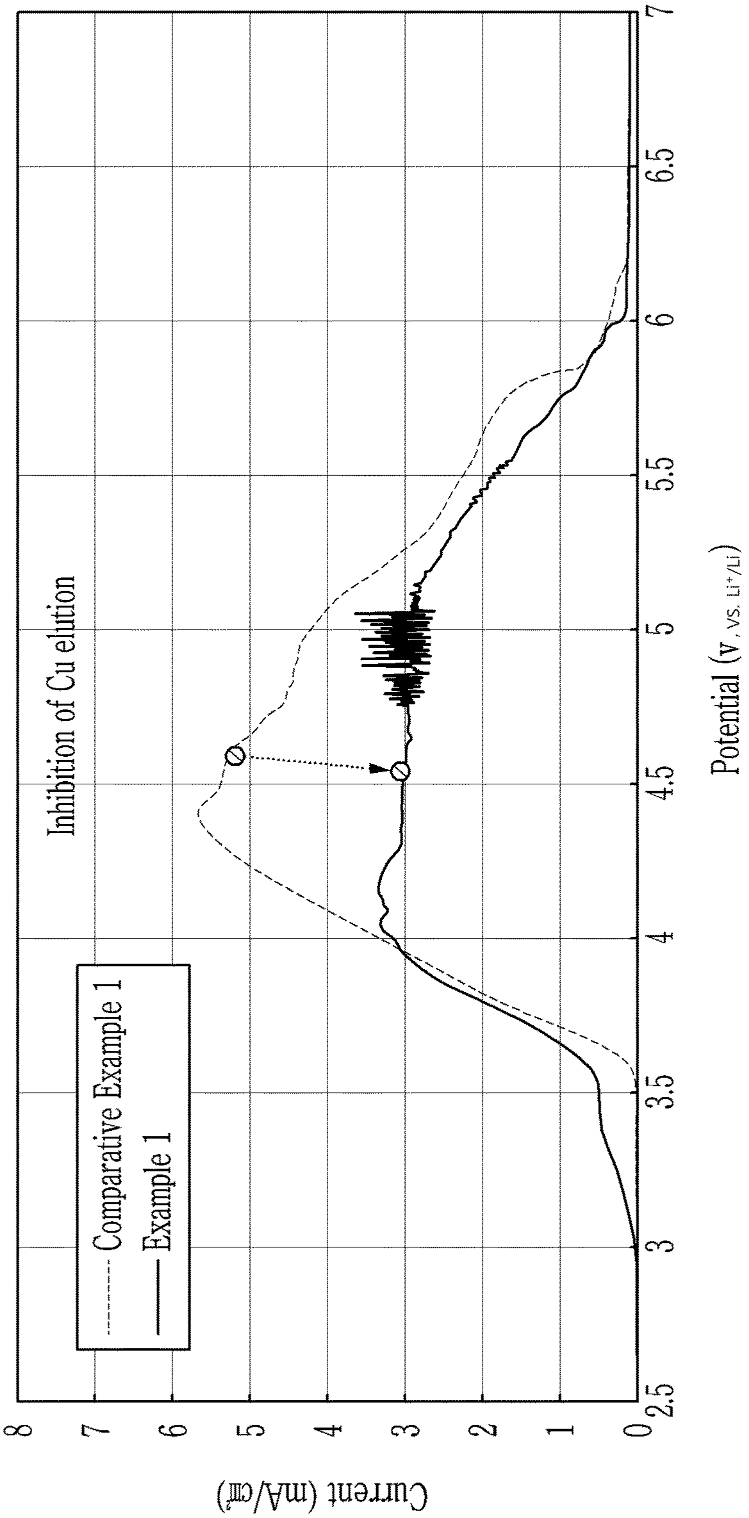
Comparative Example 1
Example 1
Inhibition of Cu elution
Current (mA/㎠)
Potential (V, vs. Li+/Li)
0
1
2
3
4
5
6
7
8
2.5
3
3.5
4
4.5
5
5.5
6
6.5
7

FIG. 6

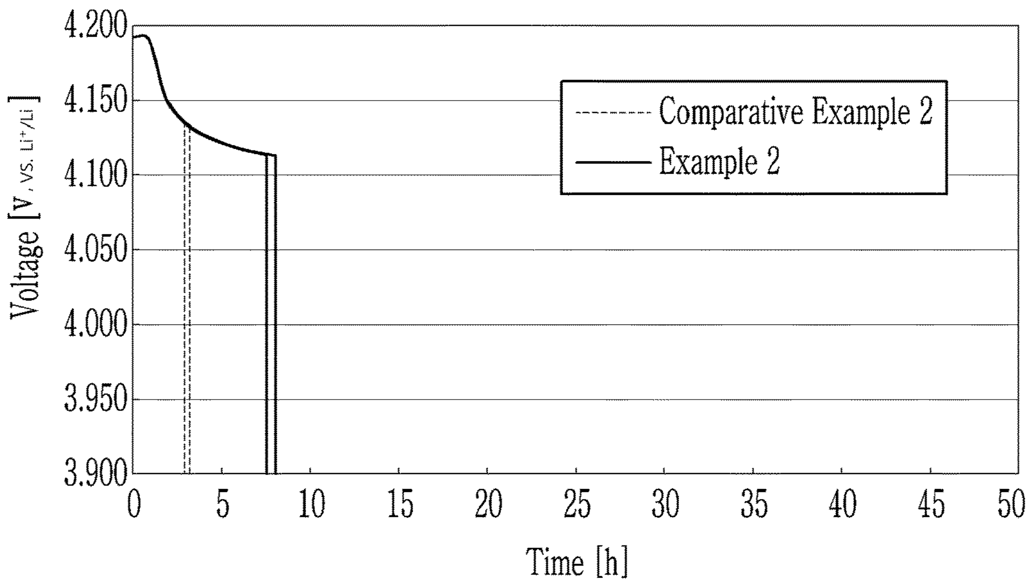
4.200
4.150
4.100
4.050
4.000
3.950
3.900
Voltage [V, vs. Li+/Li]
0
5
10
15
20
25
30
35
40
45
50
Time [h]
Comparative Example 2
Example 2

Europäisches Patentamt
European Patent Office
Office européen des brevets

# EUROPEAN SEARCH REPORT

Application Number
EP 19 16 9746

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2018/062719 A1 (SAMSUNG SDI CO LTD [KR]) 5 April 2018 (2018-04-05)<br>* claim 1 *<br>----- | 1-9 | INV.<br>H01M10/0525<br>H01M10/0567 |
| A | SERGEI A LERMONTOV ET AL: "2-Hydroperfluoropropyl Azide - a Versatile Reagent for the Oxidative Fluorination of Orginic Compounds of Trivalent Phosphorus", HETEROATOM CHEMISTRY VOLUME, vol. 4, no. 6, 1 December 1993 (1993-12-01), pages 579-585, XP055608392, DOI: https://doi.org/10.1002/hc.520040610<br>* equation (7); compound 17f *<br>----- | 8 | |

TECHNICAL FIELDS SEARCHED (IPC)

H01M

The present search report has been drawn up for all claims

1

| Place of search | Date of completion of the search | Examiner |
|---|---|---|
| Munich | 24 July 2019 | Steinreiber, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT ON EUROPEAN PATENT APPLICATION NO.** EP 19 16 9746

This annex lists the patent family members relating to the patent documents cited in the above-mentioned European search report. The members are as contained in the European Patent Office EDP file on
The European Patent Office is in no way liable for these particulars which are merely given for the purpose of information.

24-07-2019

| Patent document cited in search report | Publication date | Patent family member(s) | Publication date |
|---|---|---|---|
| WO 2018062719 A1 | 05-04-2018 | CN 109792085 A | 21-05-2019 |
| | | EP 3522287 A1 | 07-08-2019 |
| | | KR 20180036340 A | 09-04-2018 |
| | | WO 2018062719 A1 | 05-04-2018 |

EPO FORM P0459

For more details about this annex : see Official Journal of the European Patent Office, No. 12/82